# EUROPÄISCHE PATENTSCHRIFT

(11) **EP 3 099 556 B1**
(45) Veröffentlichungstag und Bekanntmachung des Hinweises auf die Patenterteilung: **18.07.2018**
(21) Anmeldenummer: 14805915.7
(22) Anmeldetag: 02.12.2014
(51) Int. Cl.: B62D 9/02, B60G 9/02, B62K 5/10, B62D 24/00

(54) **FAHRZEUG MIT NEIGERAHMEN**
VEHICLE WITH TILTING FRAME
VÉHICULE À CADRE INCLINABLE

(30) Priorität: 29.01.2014 DE 102014101087
(43) Veröffentlichungstag der Anmeldung: 07.12.2016
(73) Patentinhaber: Krammel, Werner, 93077 Bad Abbach (DE)
(72) Erfinder: Krammel, Werner, 93077 Bad Abbach (DE)
(74) Vertreter: Peters, Andreas
(86) Internationale Anmeldenummer: PCT/EP2014/076222
(87) Internationale Veröffentlichungsnummer: WO 2015/113677

(56) Entgegenhaltungen:
- FR-A1- 2 946 944
- NL-C2- 1 005 894
- US-A1- 2008 100 018
- US-A1- 2008 258 416
- US-A1- 2013 168 934

## Beschreibung

Die Erfindung betrifft ein Fahrzeug, mit einem Grundrahmen, an dem mindestens ein mittels einer Achsschenkellenkung lenkbares Kontaktelement, insbesondere ein Rad, eine Kufe, eine Raupenkette oder ein Schwimmkörper, festgelegt ist, einem gegenüber dem Grundrahmen durch einen Fahrzeuglenker neigbaren Neigerahmen mit einer Neigeachse, einem Lenkrohr mit einer schräg oder senkrecht zur Neigeachse verlaufenden Lenkachse, mindestens einer Spurstange und mindestens einem Spurstangenbetätigungselement.

Insbesondere ist bei dem Fahrzeug das Lenkrohr ebenfalls gegenüber dem Grundrahmen neigbar.

Der Begriff "Spurstange" umfasst im Zusammenhang mit der in vorliegender Anmeldung offenbarten Erfindung jegliche Ausgestaltung eines Lenkübertragungselements mit dem eine Bewegung des Spurstangenbetätigungselements auf die Achsschenkellenkung des lenkbaren Kontaktelements übertragen wird.

Es sei vorsorglich darauf hingewiesen, dass vorliegend der Begriff "Achsschenkellenkung" auch Radnabenlenkungen, wie sie beispielweise vereinzelt bei Motorrädern verwendet werden, umfasst.

Das Spurstangenbetätigungselement ist funktionell - in einem Lenkgetriebe - zwischen Lenkrohr und Spurstange angeordnet und überträgt eine vom Fahrzeuglenker hervorgerufene Lenkbewegung auf die Spurstange(n), wodurch die Fahrrichtung des Fahrzeugs über das mindestens eine lenkbare Kontaktelement verändert wird.

Bei einem derart ausgestalteten Fahrzeug kann sich der Fahrzeuglenker beim Fahren samt Neigerahmen in die Kurve legen, ohne dass sich ausgelöst durch die Lenkbewegung während der Kurvenfahrt der Sturz des lenkbaren Kontaktelements bzw. der lenkbaren Kontaktelemente ändert oder wesentlich ändert. Geringfügige Sturzänderungen aufgrund Fahrwerkskinematik sind selbstverständlich dennoch möglich.

Sind die Kontaktelemente beispielsweise Räder und beispielsweise über eine Einzelradaufhängung am Grundrahmen mit einer Spreizung, d.h. einer nicht ganz vertikalen Achse festgelegt, erfolgt eine unwesentliche Änderung des Sturzes beim Einlenken der Räder durch die Fahrwerkskinematik.

Des Weiteren ändert sich auch der Sturz unwesentlich durch das Ein- und Ausfedern.

Eine wesentliche Änderung des Sturzes beim Einlenken in die Kurve, wie z.B. bei einer Schräglage beim Motorradfahren und eine damit verbundene Verringerung der Reifenaufstandsfläche und der Haftung zwischen Reifen und Boden, erfolgt nicht.

Durch den Aufbau eines durch einen Fahrzeuglenker neigbaren Neigerahmens relativ zu einem Grundrahmen, an welchem die Kontaktelemente festgelegt sind, wird erzielt, dass der Neigerahmen durch den Fahrzeuglenker entsprechend dem Kurvenradius und der Kurvengeschwindigkeit und somit entgegen der Fliehkraft zum Kurveninneren hin geneigt werden kann. Hierdurch wird zum einen eine wesentlich bequemere Sitzhaltung für den Fahrzeuglenker erzielt, da er samt Neigerahmen sich in die Kurve legen kann und des Weiteren wird der Schwerpunkt nicht nur durch das Gewicht des Fahrzeuglenkers, sondern auch durch den Neigerahmen und sämtliche Anbauteile nach innen verlagert, wodurch die Gefahr des Kippens des Fahrzeuges deutlich reduziert wird.

Durch das Merkmal, dass die Räder und/oder Kufen am Grundrahmen so festgelegt sind, dass sich der Sturz nicht oder nur unwesentlich beim Einlenken in die Kurve ändert, wird bei Reifen mit einer im Wesentlichen ebenen Lauffläche eine maximale Kontaktfläche zwischen Reifen und Boden auch bei Kurvenfahrten aufrecht erhalten. Die Aufrechterhaltung der maximalen Kontaktfläche zwischen Reifen und Boden bei Kurvenfahrten erhöht zum einen deutlich die Sicherheit, da mehr Reibfläche zwischen Reifen und Boden zur Verfügung steht. Zum anderen steht auch in der Kurvenfahrt die volle Lauffläche zur Verfügung, wodurch die vom Reifenhersteller optimierte Lauffläche auch in der Kurve komplett für den Antrieb zur Verfügung steht.

Durch das Merkmal, dass an dem Grundrahmen Kontaktelemente festgelegt sind und ein Kontaktelement über eine Lenkung relativ zum Grundrahmen zur Fahrtrichtungsänderung drehbar und somit lenkbar ist, wird gewährleistet, dass die oben beschriebenen Vorteile auch für die zur Fahrtrichtungsänderung drehbaren Räder gelten. Die Räder drehen dabei um eine Achse im Wesentlichen senkrecht zur Fahrzeugrichtung, sodass der Sturz nahezu unverändert bleibt.

Durch diese Konstruktion ist der Grundrahmen mit den daran angeordneten Kontaktelementen im Wesentlichen parallel zur Oberfläche des Fahrbahnbelages ausgerichtet, wobei der Neigerahmen mit dem Fahrzeuglenker je nach Kurvengeschwindigkeit und Kurvenradius sich nach innen legen kann. Hierdurch entsteht ein Gefühl wie beim Motorradfahren, wobei durch die sich nicht in die Kurve neigenden Kontaktelemente wesentlich höhere Kurvengeschwindigkeiten möglich sind. Das Fahrwerk, gebildet aus dem Grundrahmen und den daran angeordneten Kontaktelementen, erlaubt eine schnellere und sichere Kurvenfahrt aufgrund der maximalen Kontaktfläche zwischen Kontaktelement und Fahrbahnbelag. Des Weiteren bringt das Fahrwerk ein verbessertes Antriebs- und Bremsverhalten in der Kurve mit sich.

Das Fahrzeug besitzt auch im geneigten Gelände, wie zum Beispiel in hügeligem Land und in den Bergen, einen besonderen Vorteil, da auch bei zur Neigungsrichtung des Geländes schräger Fahrt, zum Beispiel bei diagonaler Bergauf-oder Bergabfahrt über den Neigerahmen immer eine relativ bequeme senkrechte oder zumindest aufrechte Sitzposition eingenommen werden kann.

Ein Fahrzeug mit einem derartigen Aufbau ist aus der US 2010/0320023 A1 bekannt. Die Antriebseinheit ist fest mit dem Grundrahmen verbunden. Durch die hohe Anordnung des Antriebs verbunden mit dem hohen Schwerpunkt des Antriebs wird die Kippneigung des Fahrzeugs bei Kurvenfahrt nicht wesentlich reduziert.

Aus der US 7,946,371 ist ein Motorschlitten bekannt, bei dem sich die Karosserie inklusiv Motor und Antrieb, gegenüber dem vorderseitigen Fahrgestell in die Kurve neigen kann. Ziel ist hierbei, dass die am Fahrgestell angebrachten Ski bei Kurvenfahrt nicht auf den Kanten fahren.

In der US 2,643,897 ist ein Verbindungsmittel zwischen einer Autokarosserie und den Rädern beschrieben, das ein Schwanken des Fahrzeugs bei unebener oder schräger Straße vermeiden soll.

Die US 2008/0100018 A1 beschreibt ein Fahrzeug-Federungssystem, bei dem die Räder, der Fahrgastteil und ggf. der Kofferraum gegenüber dem Motor- und Antriebsteil inklusiv Federung des Fahrzeugs neigbar sind.

In der NL000001005894C ist ein Fahrzeug mit einem Neigerahmen, der um eine an einem Grundrahmen befestigten vertikalen Schwenkachse horizontal schwenkbar ist, beschrieben, an dem Spurstangen zu zwei lenkbaren Rädern befestigt sind. Eine Betätigung der Spurstangen erfolgt über Drehen einer über ein Gelenk an einem Grundrahmen befestigten Lenksäule des Neigerahmens. Bei Drehen der Lenksäule wird der Neigerahmen horizontal um die Schwenkachse geschwenkt, wodurch die Spurstangen ebenfalls horizontal in Schwenkrichtung verschoben werden und ein Einlenken der lenkbaren Räder bewirken. Dieser komplexe Lenkmechanismus erzeugt bei Kurvenfahrt über den Neigerahmen ein Rückstellmoment auf die Lenksäule, nicht jedoch auf eine Neigung des Neigerahmens. Ein Neigen des Neigerahmens alleine ruft keine Lenkbewegung an den lenkbaren Rädern hervor.

US 2013/168934 offenbart den Oberbegriff des Anspruchs 1.

Schließlich sei noch die FR 2 946 944 A1 genannt, die ebenfalls ein Fahrzeug mit Neigungstechnik und einem sehr komplex gestalteten Lenkmechanismus mit mehreren Seilzügen zeigt.

Der Erfindung liegt die Aufgabe zugrunde, ein Fahrzeug mit Neigerahmen zur Verringerung der Kippneigung bereitzustellen, das eine verbesserte Lenkung aufweist.

Diese Aufgabe wird durch ein Fahrzeug mit den Merkmalen des Patentanspruches 1 gelöst. Vorteilhafte Ausgestaltungen der Erfindung sind in den Unteransprüchen angegeben. Der Offenbarungsgehalt aller Ansprüche wird hiermit durch Rückbezug in die Beschreibung aufgenommen.

Ein Fahrzeug gemäß der Erfindung zeichnet sich dadurch aus, dass bei Neigen des Neigerahmens in Kurvenrichtung um die Neigeachse, sprich, wenn der Fahrzeuglenker sich in die Kurve legt, und unabhängig davon bei Drehen des Lenkrohrs in Kurvenrichtung um die Lenkachse die mindestens eine Spurstange über ein Lenkgetriebe derart betätigt wird, dass das mindestens eine lenkbare Kontaktelement eine gewünschte Lenkbewegung in die Kurvenrichtung erfährt, ohne dass dadurch eine Änderung des Sturzes des Kontaktelements bei Kurvenfahrt erfolgt.

Bei einem Fahrzeug gemäß der Erfindung ist mindestens ein Spurstangenbetätigungselement im Lenkgetriebe beweglich gegenüber dem Neigerahmen angeordnet.

Die Fahrtrichtung eines Fahrzeugs gemäß der Erfindung wird verändert indem ein Lenkrohr entweder durch Drehen um eine Lenkachse oder durch Neigen um eine Neigeachse das mindestens eine Spurstangenbetätigungselement bewegt und damit eine Verschiebung der Spurstange(n) bewirkt. Eine Drehung des Lenkrohres hat dabei keine Auswirkung auf die Lage des Neigerahmens gegenüber dem Grundrahmen. Der Sturz des lenkbaren Kontaktelements ändert sich weder aufgrund Neigung des Neigerahmens noch aufgrund Drehung des Lenkrohres. Folglich bleibt der Sturz des lenkbaren Kontaktelements bei Kurvenfahrt im Wesentlichen verändert.

Mit einem derartigen Lenkmechanismus ist gewährleistet, dass das mindestens eine lenkbare Kontaktelement gegenüber dem Grundrahmen drehbar ist und sich dennoch bei Kurvenfahrt nicht oder nur unwesentlich mit dem Neigerahmen neigt.

Der Lenkmechanismus bringt zudem den besonderen Vorteil mit sich, dass ein Nachlauf des mindestens einen lenkbaren Kontaktelements bei dessen Einlenken ein Rückstellmoment auf den Neigerahmen und zugleich auf das Lenkrohr und die damit verbundene Drehlenkung bewirkt.

Dies erzeugt für den Fahrzeuglenker in der Kurve während der Kurvenfahrt eine Rückkopplung der Lenkungskräfte auf den Neigerahmen und auf das Lenkrad bzw. den Lenker. Er kann zudem zur Korrektur der Kurvenfahrt das Lenkrad bzw. den Lenker betätigen und/oder die Neigung des Neigerahmens durch Verstärkung oder Verringerung der Kurvenlage verändern.

Zusätzlich bewirkt das Rückstellmoment eine Stabilisierung der Lenkung und des gesamten Fahrzeugs bei Geradeausfahrt.

Das Rückstellmoment ist abhängig vom Nachlaufwinkel des mindestens einen lenkbaren Kontaktelements. Mit zunehmendem Nachlaufwinkel werden die Rückstellmomente und die damit verbundenen auf Neigerahmen und Lenkrohr wirkenden Rückstellkräfte größer. Bei einer vorteilhaften Ausgestaltung des Fahrzeugs ist die Achsschenkellenkung des mindestens einen lenkbaren Kontaktelements derart ausgestaltet, dass der Nachlaufwinkel veränderbar und damit auf die Bedürfnisse verschiedener Fahrzeuglenker einstellbar ist.

Mit zunehmender Fahrgeschwindigkeit werden die Rückstellkräfte größer und wirken bei Geradeausfahrt stabilisierend.

Bei einer vorteilhaften Ausgestaltung eines Fahrzeugs gemäß der Erfindung ist das Spurstangenbetätigungselement sowohl in einem Abstand zur Neigeachse als auch in einem Abstand zur Lenkachse angeordnet.

Durch Veränderung dieser Abstände kann der Einfluss einer Neigung des Neigerahmens und der Einfluss einer Drehung des Lenkrohres auf den Lenkeinschlag verändert werden.

Bei einer vorteilhaften Ausgestaltung eines Fahrzeugs gemäß der Erfindung ist das Spurstangenbetätigungselement in einem am Neigerahmen befestigten Führungselement beweglich angeordnet. In diesem Führungselement kann das Spurstangenbetätigungselement durch Drehen des Lenkrohres betätigt werden. Unabhängig davon wird bei Neigung des Neigerahmens das Führungselement und damit das Spurstangenbetätigungselement derart gegenüber dem Grundrahmen bewegt, dass die Spurstangen betätigt werden.

Bei einer anderen vorteilhaften Ausgestaltung eines Fahrzeugs gemäß der Erfindung ist das Spurstangenbetätigungselement in einem am Grundrahmen befestigten Führungselement beweglich angeordnet. In diesem Führungselement kann das Spurstangenbetätigungselement durch Neigen des Neigerahmens und unabhängig davon durch Drehen des Lenkrohres betätigt werden.

Bei einer nochmals anderen vorteilhaften Ausgestaltung eines Fahrzeugs gemäß der Erfindung ist das Spurstangenbetätigungselement in einem Abstand zur Neigeachse und einem Abstand zur Lenkachse am Lenkrohr befestigt, so dass dieser durch Neigen des Neigerahmens und unabhängig davon durch Drehen des Lenkrohres betätigt werden kann. Gemäß der Erfindung ist das Lenkrohr derart an den Neigerahmen gekoppelt, dass es sich bei Neigen des Neigerahmens automatisch mit neigt. Das Lenkrohr kann dazu fest mit dem Neigerahmen verbunden sein, so dass es sich im gleichen Winkel neigt sie der Neigerahmen, kann aber auch anderweitig am Fahrzeug befestigt und über eine geeignete Mechanik an den Neigerahmen derart gekoppelt sein, dass sich bei Neigungen des Neigerahmens auch das Lenkrohr gegenüber dem Grundrahmen neigt.

Die Lenkachse und die Neigeachse müssen nicht in einer gemeinsamen Ebene liegen, sondern können auch voneinander beabstandet sein.

Bei einer bevorzugten Ausgestaltung eines Fahrzeugs gemäß der Erfindung hat dieses einen Grundrahmen und einen gegenüber dem Grundrahmen in Fahrtrichtung nach links und rechts durch einen Fahrzeuglenker neigbaren Neigerahmen, wobei
- an dem Grundrahmen mindestens zwei Kontaktelemente angeordnet sind und zumindest eines davon mittels der oben angegebenen Lenkung relativ zum Grundrahmen zur Fahrtrichtungsänderung um eine Achse drehbar ist,
- am Neigerahmen zumindest eine Sitz- oder Stehfläche für den Fahrzeuglenker befestigt ist,
- am Lenkrohr ein Lenkrad oder eine Lenkstange oder dergleichen befestigt ist,
- im Neigerahmen eine Antriebseinheit aufgenommen ist, und
- zur Überbrückung einer Neigebewegung zwischen dem Neigerahmen und dem Grundrahmen und zur Übertragung eines Antriebsmoments von der Antriebseinheit im Neigerahmen auf ein Antriebselement, beispielsweise ein Antriebsrad oder Antriebsritzel im Grundrahmen ein Schwenkgetriebe vorgesehen ist.

Das Schwenkgetriebe weist vorzugsweise zumindest ein Kugelantriebsgelenk auf.

Um die Neigebeweglichkeit des Schwenkgetriebes zu erhöhen, können vorzugsweise auch zwei Kugelantriebsgelenke im Schwenkgetriebe vorgesehen sein.

Durch die Anordnung der Antriebseinheit im Neigerahmen wird mehr Masse mit dem Neigerahmen bewegt, wodurch die Kippneigung in der Kurve reduziert wird. Die Antriebseinheit kann als Verbrennungsmotor, Elektromotor oder auch als einfacher Pedalantrieb ausgeführt sein.

Gemäß einer bevorzugten Ausgestaltung eines Fahrzeugs gemäß der Erfindung ist hierzu am Getriebe im Neigerahmen ein Antriebsrad oder -ritzel parallel zur neigbaren Ebene des Neigerahmens und am Kugelantriebsgelenk des Schwenkgetriebes ein Schwenkrad oder -ritzel vorgesehen, das mit dem Antriebsrad oder Ritzel über ein Kraftübertragungsmittel verbunden ist. Als Kraftübertragungsmittel wird in der Regel eine Kette oder ein Zahnriemen verwendet. Auch das Kraftübertragungsmittel und das Schwenkrad oder -ritzel des Schwenkgetriebes sind in der gleichen Ebene wie das Antriebsrad oder -ritzel angeordnet.

Durch die Ausbildung des Antriebsrads oder -ritzels parallel zur neigbaren Ebene des Neigerahmens wird eine Kraftübertragung vom geneigten Neigerahmen über das Schwenkgetriebe auf die Räder ermöglicht, ohne dass ein Aufstellmoment des Antriebsrads oder -ritzels auf den Neigerahmen erzeugt wird. Dies ist von entscheidender Bedeutung, da zum Beispiel bei einer Verbindung des Getriebes über eine in Fahrtrichtung ausgerichtete Kardanwelle auf die hintere Antriebsachse beim Beschleunigen und Abbremsen ein Moment auf den Neigerahmen erzeugen würde und der Fahrzeuglenker dieses zusätzlich beim Beschleunigen und Abbremsen kontrollieren müsste. Durch die Anordnung des Antriebsrades oder Ritzels in einer Ebene parallel zur Ebene des Neigebaren Rahmens und dem Schwenkgetriebe wirkt beim Beschleunigen und Abbremsen kein Aufstellmoment auf den Neigerahmen, sodass dieser beim Beschleunigen und Abbremsen sich weder aufstellt noch niedergedrückt wird.

Beim Beschleunigen und Abbremsen wirken somit nur Kräfte in Fahrtrichtung und keine Drehmomentachse in Fahrtrichtung.

Gemäß einer weiteren bevorzugten Ausgestaltung eines Fahrzeugs gemäß der Erfindung ist der Neigerahmen über Lagereinheiten mit einer Neigeachse in Fahrtrichtung mit dem Grundrahmen verbunden. Die Neigeachse kann über ein Drehgelenk unmittelbar am Grundrahmen realisiert sein oder alternativ kann auch zwischen Grundrahmen und Neigerahmen als Lagereinheit eine Kulissenführung vorgesehen sein, sodass virtuell die Neigeachse außerhalb des Grundrahmens, beispielsweise auf der Fahrbahnoberfläche angeordnet ist. Durch eine Absenkung der Neigeachse zwischen Neigerahmen und Grundrahmen werden eine weitere Verringerung der Kippgefahr bei schneller Kurvenfahrt und auch eine bessere Straßenlage erzielt.

Die Neigeachse ist stets so gewählt, dass auch bei extremer Kurvenfahrt die Gewichts- und Fliehkraft des Neigerahmens und des Fahrzeuglenkers in die Grundfläche aufgespannt durch die Räder und oder Kufen trifft.

Die Erfindung eignet sich insbesondere für vierrädrige und dreirädrige Fahrzeuge. Ebenso eignet sich die Erfindung für ein Schneemobil mit Antriebsraupe und mindestens einer Kufe zur Steuerung, genauso wie für ein Wasserfahrzeug mit Antriebsturbine oder -propeller und mindestens einem Schwimmkörper zur Steuerung.

Ein Fahrzeug gemäß der Erfindung kann ebenso als Zweirad ausgestaltet sein, bei dem ein Neigerahmen gegenüber einem Grundrahmen neigbar ausgestaltet ist und über eine Radnabenlenkung mit Nachlaufwinkel verfügt.

Ebenso denkbar ist ein Fahrzeug gemäß der Erfindung mit einer Allradlenkung, bei dem sowohl an der Vorderachse als auch an der Hinterachse die Kontaktelemente Achsschenkellenkungen aufweisen, die über Drehung des Lenkrohres oder Neigung des Neigerahmens betätigt werden.

Die mittels Achsschenkellenkung lenkbaren Kontaktelemente eines Fahrzeugs gemäß der Erfindung können über Stoßdämpfer und Querlenker in herkömmlicher Weise gefedert sein.

Ein Fahrzeug gemäß der Erfindung kann eine Arretierung für den Neigerahmen enthalten, damit dieser bei Bedarf gegenüber dem Grundrahmen festgehalten werden kann.

Mit Vorteil kann bei allen oben beschriebenen Ausgestaltungen eines Fahrzeugs gemäß der Erfindung und bei allen weiter unten beschriebenen Ausführungsbeispielen die Neigeachse gegenüber dem Grundrahmen feststehend sein. Mit "feststehend" ist im vorliegenden Zusammenhang gemeint, dass die Neigeachse am Grundrahmen teilweise oder ganz federnd aufgehängt oder am Grundrahmen exakt feststehend montiert sein kann.

Wesentlich für die Erfindung ist der Wirkungsmechanismus, dass sowohl ein Drehen des Lenkrohres als auch ein Neigen des Neigerahmens unabhängig voneinander auf das Spurstangenbetätigungselement wirken, ohne dass ein Drehen des Lenkrohres eine unmittelbare Auswirkung auf die Position des Neigerahmens gegenüber dem Grundrahmen hat und ohne dass eine Neigung des Neigerahmens eine unmittelbare Auswirkung auf die Drehstellung des Lenkrohres hat.

Ein Fahrzeug gemäß der Erfindung kann ein Lenkgetriebe mit den oben beschriebenen Eigenschaften an einer Vorderachse und/oder an einer Hinterachse haben.

Mit einem Fahrzeug gemäß der Erfindung kann bei Kurvenfahrt mit geneigtem Neigerahmen die Einlenkung der lenkbaren Kontaktelemente in jedem Augenblick über das Lenkrohr verändert und somit der Fahrsituation angepasst werden.

Bei einem Fahrzeug gemäß der Erfindung ist denkbar, dass je ein Lenkgetriebe und lenkbare Kontaktelemente vorne und hinten am Fahrzeug vorgesehen sind, um eine Allradlenkung zu ermöglichen. Denkbar ist in diesem Zusammenhang auch, dass zum Beispiel vorne eine Lenkung durch Drehen des Lenkrohres und Neigen des Neigerahmens - wie oben beschrieben - erfolgt und hinten nur eine Lenkung durch Neigen des Neigerahmens.

Weitere vorteilhafte Ausgestaltungen und Vorteile der Erfindung ergeben sich aus den Unteransprüchen und den nachfolgenden Beschreibungen verschiedener Ausführungsbeispiele.

Nachfolgend wird anhand in den Zeichnungen dargestellter Ausführungsbeispiele die Erfindung näher erläutert. In den Zeichnungen zeigen jeweils in schematischer Darstellung:
- Figur 1: eine perspektivische Ansicht eines Ausführungsbeispiels für ein vierrädriges Fahrzeug gemäß der Erfindung,
- Figur 2: in perspektivischer Ansicht ein erstes Ausführungsbeispiel für einen Lenkmechanismus eines Fahrzeugs gemäß der Erfindung,
- Figur 3: einen Schnitt durch den Lenkmechanismus gemäß Figur 2 entlang der in Figur 2 eingezeichneten Ebene A,
- Figur 4: in perspektivischer Ansicht ein zweites Ausführungsbeispiel für einen Lenkmechanismus eines Fahrzeugs gemäß der Erfindung,
- Figur 5: einen Schnitt durch den Lenkmechanismus gemäß Figur 4 entlang der in Figur 4 definierten Ebene B,
- Figur 6: in perspektivischer Ansicht ein drittes Ausführungsbeispiel für einen Lenkmechanismus eines Fahrzeugs gemäß der Erfindung,
- Figur 7: einen Schnitt durch den Lenkmechanismus gemäß Figur 6 entlang der in Figur 6 definierten Ebene C,
- Figur 8: in perspektivischer Ansicht ein viertes Ausführungsbeispiel für einen Lenkmechanismus eines Fahrzeugs gemäß der Erfindung,
- Figur 9: einen Schnitt durch den Lenkmechanismus gemäß Figur 8 entlang der in Figur 8 definierten Ebene D,
- Figur 10: eine perspektivische Ansicht eines Ausführungsbeispiels für ein als Schneemobil ausgebildetes Fahrzeug gemäß der Erfindung,
- Figur 11: eine perspektivische Ansicht eines Ausführungsbeispiels für ein dreirädriges Fahrzeug gemäß der Erfindung, und
- Figur 12: eine perspektivische Ansicht eines weiteren Ausführungsbeispiels für ein dreirädriges Fahrzeugs gemäß der Erfindung.

Nachfolgend werden figurenübergreifend Elemente der Ausführungsbeispiel mit gleicher Funktion mit dem gleichen Bezugszeichen versehen und nicht pro Figur gesondert erläutert.

Die Bezugszeichen bezeichnen die Elemente der verschiedenen Ausführungsbeispiele wie in der Bezugszeichenliste angegeben, welche hiermit durch Rückbezug in die Beschreibung mit aufgenommen wird.

Allen unten beschriebenen Ausführungsbeispielen von Fahrzeugen gemäß der Erfindung ist gemein, dass aufgrund des Nachlaufwinkels y einer Achsschenkellenkung ein Rückstellmoment und somit Rückstellkräfte auf Lenkung und Neigerahmen wirken. Mit Vorteil sind diese Rückstellkräfte durch Variation des Nachlaufwinkels y individuell einstellbar.

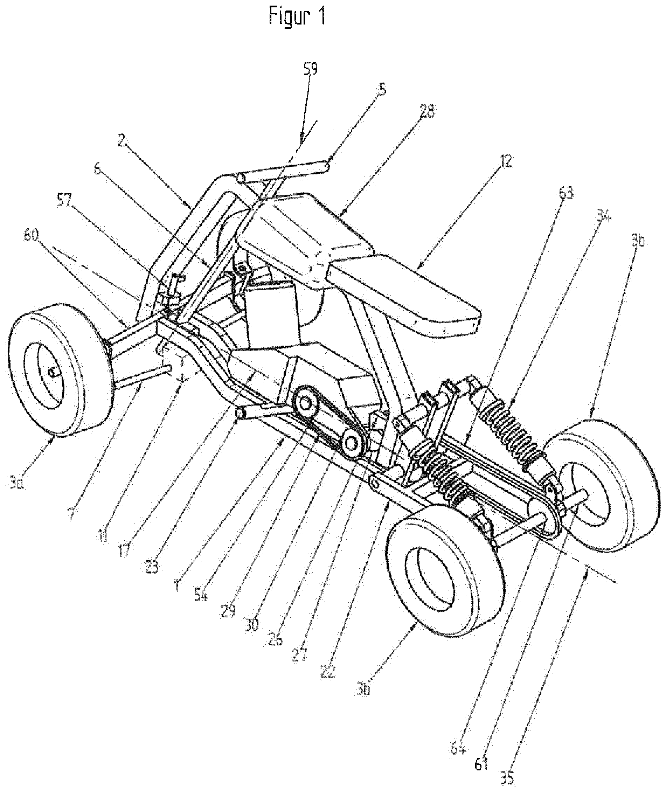

Figur 1 zeigt in perspektivischer Ansicht ein Fahrzeug mit einem Grundrahmen 1 mit einer Vorderachse 60 und einer Hinterachse 61 und einem Neigerahmen 2, der drehbar am Grundrahmen 1 gelagert ist und relativ zum diesem durch einen Fahrzeuglenker, insbesondere in der Kurvenfahrt, geneigt werden kann.

An der Vorderachse 60 und der Hinterachse 61 des Grundrahmens 1 sind als Kontaktelemente 3a, 3b je zwei Räder vorgesehen, wobei die beiden vorderen Räder 3a relativ zum Grundrahmen 1 an je einem Achsschenkel drehbar angeordnet sind und zur Steuerung des Fahrzeugs dienen. Die vorderen Räder 3a sind um eine im Wesentlichen vertikale oder nahezu vertikale Achse drehbar und der Sturzwinkel bleibt bei der Kurvenfahrt nahezu unverändert.

Das Fahrzeug stellt ein so genanntes Quad dar, welches gerne als Freizeitmobil oder im Gelände verwendet wird.

Am Neigerahmen 2 sind eine Sitzfläche 12, ein Lenker 5 und ein daran anschließendes Lenkrohr 6 sowie Fußrasten 23 angeordnet. Das Lenkrohr 6 ist drehbar im Neigerahmen 2 gelagert und neigt sich folglich gleichzeitig mit einer Neigung des Neigerahmens 2.

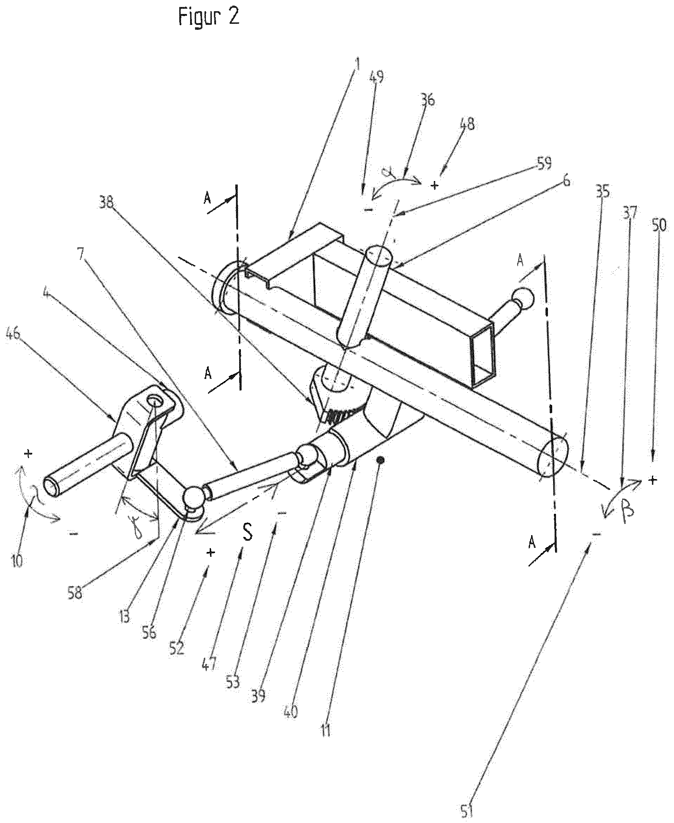

In der Nähe der Vorderachse 60 ist unterhalb des Grundrahmens 1 ein Lenkgetriebe 11 angeordnet, das ein Spurstangenbetätigungselement 39 (vgl. Figuren 2 bis 9) umfasst.

Das Spurstangenbetätigungselement 39 ist innerhalb des Lenkgetriebes 11 derart mechanisch an den Neigerahmen 2 und an das Lenkrohr 6 gekoppelt, dass dieses durch Drehen des Lenkrohres 6 und unabhängig davon durch Neigen des Neigerahmens 2 betätigt werden kann. Vier verschiedene Ausführungsbeispiele für ein derartiges Lenkgetriebe 11 sind weiter unten in Verbindung mit den Figuren 2 bis 9 näher erläutert. Das Lenkgetriebe 11 kann aber auch in einer anderen konkreten Ausgestaltung gemäß der Erfindung als in den Ausführungsbeispielen gezeigt ausgebildet sein.

Zur Steuerung des Fahrzeugs sind die vorderen Räder 3a relativ zum Grundrahmen 1 um die Achsschenkel 4 drehbar. Eine solche Drehbewegung der vorderen Räder 3a wird erzeugt, indem eine Bewegung des Spurstangenbetätigungselements 39 aufgrund Drehen des Lenkrohres und/oder Neigen des Neigerahmens 2 über an das Spurstangenbetätigungselement 39 gekoppelte Spurstangen 7 auf Spurhebel 13 von Radträgern 46 (siehe Figur 2) auf die vorderen Räder 3a übertragen wird.

Die vorderen Räder 3a sind beispielsweise über eine so genannte Einzelradaufhängung am Grundrahmen 1 festgelegt, welche Federdämpferelemente und Querlenker umfassen können.

Im Neigerahmen 2 ist ein Energiespeicher 28, eine Antriebseinheit 17 und ein Schwenkgetriebe 26 vorgesehen. Die Antriebseinheit 17 ist beispielsweise ein Verbrennungsmotor und der Energiespeicher 28 ist beispielsweise ein Kraftstofftank, der den Verbrennungsmotor mit dem notwendigen Kraftstoff versorgt.

Die Unterbringung des Energiespeichers 28, der Antriebseinheit 17 und des Schwenkgetriebes 26 im Neigerahmen hat den Vorteil, dass wesentlich mehr Gewicht bei der Kurvenfahrt nach innen geneigt werden kann und somit die Straßenlage verbessert und die Gefahr des Aufkippens deutlich verringert wird.

Die Kraftübertragung vom Schwenkgetriebe 26 auf die hinteren Räder 3b erfolgt über ein Antriebsrad oder Antriebsritzel 54, ein Kraftübertragungsmittel 29, in der Regel in Form eines Zahnriemens oder einer Kette, und eines Schwenkrades oder -ritzels 30, welches an dem Schwenkgetriebe 26 festgelegt ist.

Das Schwenkgetriebe 26 weist zumindest ein Kugelantriebsgelenk 27 auf, über welches die Schwenkbewegung zwischen Grundrahmen 1 und Neigerahmen 2 aufgenommen wird.

In einer bevorzugten Ausführungsform sind im Schwenkgetriebe 26 zwei Kugelantriebsgelenke 27 ausgeführt. Über die

Kugelantriebsgelenke 27 wird vor allem das Drehmoment für den Antrieb übertragen.

Durch die Anordnung des Antriebsrades oder -ritzels 54, des Kraftübertragungsmittels 29 und des Schwenkrades oder - ritzels 30 in einer Ebene parallel zum Neigerahmen 2 wird erreicht, dass kein Kraftmoment in Fahrtrichtung wirkt und somit beim Beschleunigen oder beim Bremsen keine seitlich wirkenden Kippmomente auf den Neigerahmen 2 entstehen.

Das Schwenkgetriebe 26 weist ein zweites Schwenkrad oder - ritzel auf, welches in seiner Achse fest am Grundrahmen 1 gelagert ist. Das zweite Schwenkrad oder -ritzel ist über ein zweites Kraftübertragungsmittel 63 wieder in Form einer Kette oder eines Zahnriemens mit einem zweiten Antriebsrad oder - ritzel 64 gekoppelt, welches die Hinterachse 61 antreibt, an der die Räder 3b festgelegt sind.

In der gezeigten Ausführungsform weist das Quad eine starre Hinterachse 61 auf, welche über ein Federdämpfersystem 34 relativ zum Grundrahmen 1 federn kann. Hierzu ist die Hinterachse 61 über eine Schwinge 22 mit einer am Grundrahmen 1 vorgesehenen Schwingenachse verbunden, um welche sich die Hinterachse 61 entgegen der Federkraft im Federdämpfersystem 34 bewegen kann.

Damit sich der Neigerahmen 2 relativ zum Grundrahmen 1 neigen kann, ist dieser über Lagereinheiten am Grundrahmen 1 festgelegt, wobei die Drehachse der Lagereinheiten, welche die Neigeachse 35 des Neigerahmens 2 darstellt, in Fahrtrichtung verläuft.

Mit dem in Verbindung mit Figur 1 beschriebenen Fahrzeug kann der Fahrzeuglenker in der Kurvenfahrt den Neigerahmen 2 samt Antriebseinheit 17, Schwenkgetriebe 26 und Energiespeicher 28 in die Kurve legen, wodurch ein Gefühl wie beim Motorradfahren entsteht. Durch das Quad mit der beschriebenen Lenkung wird eine deutlich verbesserte Straßenlage, die eine schnellere Kurvenfahrt zulässt, und zugleich eine Rückkopplung der Lenkungskräfte auf Schwenkrahmen und Lenkung wie beim Auto erreicht.

Für die schnellere Kurvenfahrt sorgen die Räder 3a, 3b, deren Sturz sich nicht oder nur unwesentlich beim Einlenken in die Kurve ändert. Hierdurch wird eine sehr große Kontaktfläche zwischen den Rädern 3a, 3b und dem Boden in der Kurve erzielt, da die im Wesentlichen ebene Lauffläche der Räder 3a, 3b im Wesentlichen vollständig in Kontakt mit dem Fahrbahnbelag verbleibt.

Des Weiteren kann der Fahrer sehr risikolos an den Grenzbereich des Fahrzeuges gehen, da die Gefahr des Kippens deutlich reduziert ist.

In einer nicht dargestellten Abwandlung eines Fahrzeugs gemäß Ausführungsbeispiel von Figur 1 können die Lagereinheiten, über die der Neigerahmen 2 am Grundrahmen 1 festgelegt ist, als Kulissenführungen vorgesehen sein, sodass die Neigeachse 35 von oberhalb des Grundrahmens 1 nach unten, beispielsweise auf die Fahrbahnoberfläche, verlagert wird. Bei dieser Ausführungsform neigt sich der Neigerahmen 2 auf einer Kreisbahn mit einer Drehachse auf der Fahrbahnoberfläche. Im Schwenkgetriebe 26 sind bei dieser Ausführungsform entsprechende Längenausgleichselemente vorgesehen.

In einer weiteren nicht dargestellten Abwandlung eines Fahrzeugs gemäß Ausführungsbeispiel von Figur 1 ist an Stelle des Heckantriebs ein Frontantrieb verwendet, bei dem die vorderen Räder 3a über eine Antriebswelle mit dem Schwenkgetriebe 26 verbunden sind.

In nochmals weiteren nicht dargestellten Abwandlungen eines Fahrzeugs gemäß Ausführungsbeispiel von Figur 1 ist die Antriebseinheit an der Schwinge 22 oder im Grundrahmen 1 angeordnet.

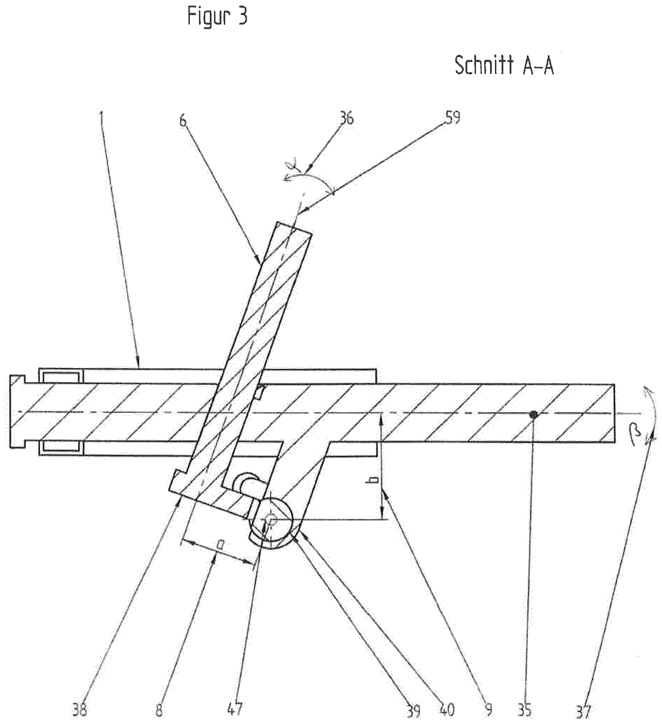

Bei dem in den Figuren 2 und 3 dargestellten ersten Ausführungsbeispiel eines Lenkgetriebes 11 beispielsweise für ein Fahrzeug gemäß den Figuren 1, und 10 bis 12 (siehe weiter unten) ist das Spurstangenbetätigungselement 39 eine Zahnstange, die in einem als Zahnstangenführungshülse ausgebildeten Führungselement 40 beweglich angeordnet ist. Das Führungselement 40 ist von unten am Neigerahmen 2 mit einem Abstand zu diesem befestigt, sodass bei Neigung des Neigerahmens 2 das Spurstangenbetätigungselement 39 um die Neigeachse 35 quer zur Fahrtrichtung verschoben wird. Ein Lenkrohr 6 verläuft durch die Neigeachse 35 des Neigerahmens 2 und weist in geeignetem Abstand unterhalb der Neigeachse 35 ein Zahnradsegment 38 auf, das in die Zahnstange eingreift und bei Drehen des Lenkrohres 6 das Spurstangenbetätigungselement 39 - hier die Zahnstange - innerhalb des Führungselements 40 - hier die Zahnstangenführungshülse - verschiebt.

Eine Bewegungsachse 47 des Spurstangenbetätigungselements 39 weist demnach zur Lenkachse 59 einen Abstand 8 und zur Neigeachse 35 einen Abstand 9 auf.

Sowohl bei Drehung des Lenkrohres 6 im Uhrzeigersinn als auch bei Neigung des Neigerahmens 2 im Uhrzeigersinn (jeweils in Fahrtrichtung gesehen) werden das Spurstangenbetätigungselement 39 und folglich auch die Spurstangen 7 vermittels des Zahnradsegments 38 bzw. vermittels des Führungselements 40 in Fahrtrichtung gesehen nach links verschoben, so dass die vorderen Räder 3a im Uhrzeigersinn um ihre Achsschenkel 4 gedreht werden und damit eine Lenkbewegung in Fahrtrichtung gesehen nach rechts erfahren. Bei Drehung des Lenkrohres 6 gegen den Uhrzeigersinn als auch bei Neigung des Neigerahmens 2 gegen den Uhrzeigersinn erfahren die vorderen Räder 3a in analoger Weise eine Lenkbewegung nach links.

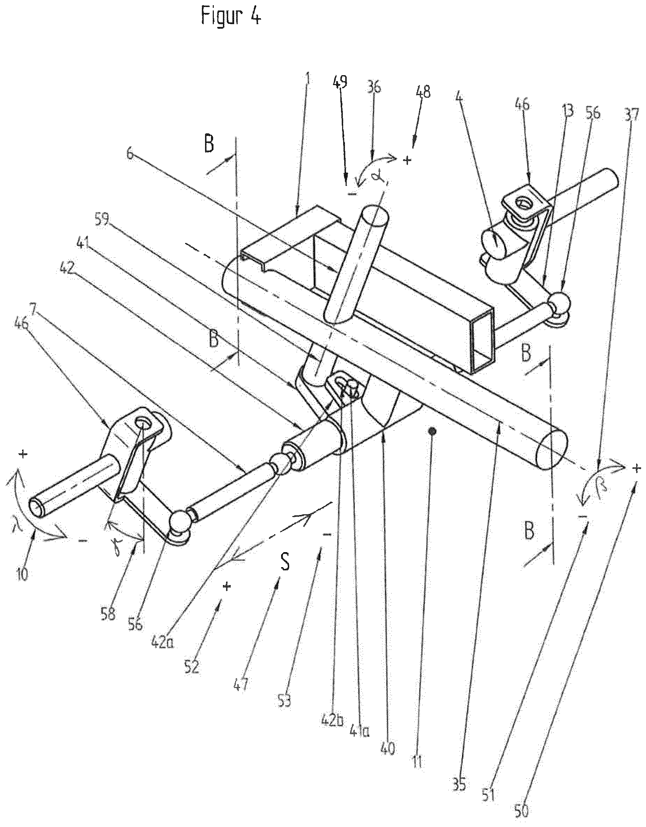

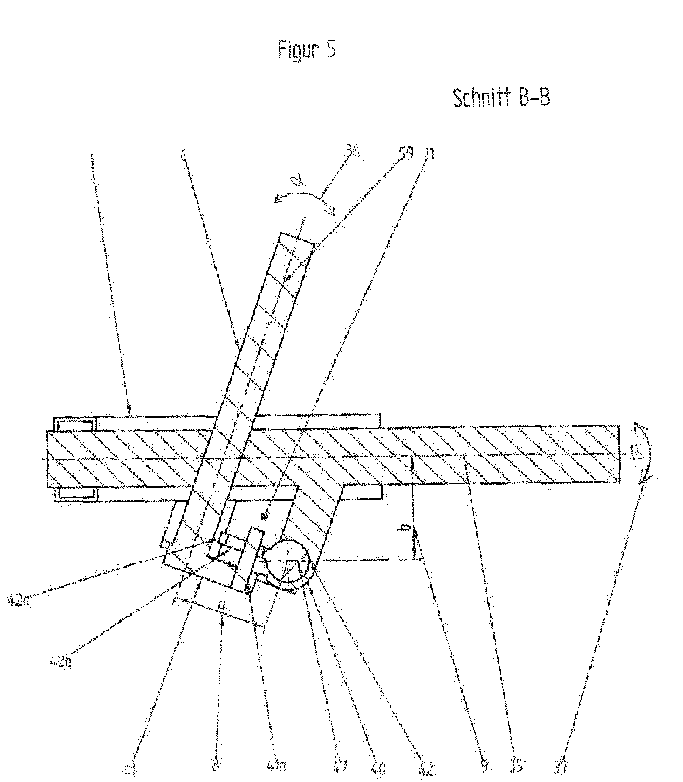

Das in den Figuren 4 und 5 dargestellte zweite Ausführungsbeispiel eines Lenkgetriebes 11 beispielsweise für ein Fahrzeug gemäß den Figuren 1, und 10 bis 12 unterscheidet sich von dem ersten Ausführungsbeispiel der Figuren 2 und 3 insbesondere dadurch, dass als Spurstangenbetätigungselement 39 an Stelle der Zahnstange eine Stange 42 vorgesehen ist, die seitlich eine Lasche 42a mit einem Langloch 42b aufweist, und dass an Stelle des Zahnradsegments 38 ein Lenkhebel 41 mit einem Bolzen 41a vorgesehen ist, der in das Langloch 42b der Lasche 42a eingreift.

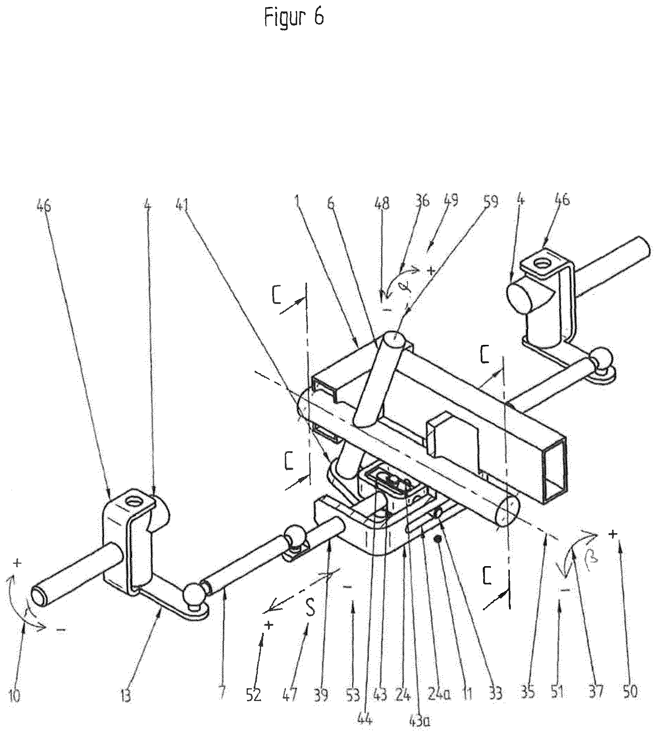

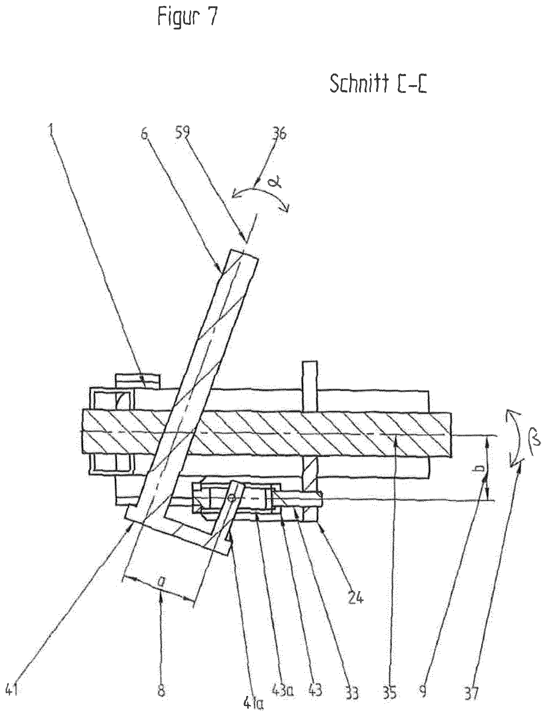

Bei dem in den Figuren 6 und 7 dargestellten dritten Ausführungsbeispiel eines Lenkgetriebes 11 beispielsweise für ein Fahrzeug gemäß den Figuren 1, und 10 bis 12 weist das Spurstangenbetätigungselement 39 eine Spurstangenantriebskulisse 43 auf, die mittels eines Kulissenführungsbolzens 33 in einem sich senkrecht zur Fahrtrichtung erstreckenden ersten Langloch 24a eines zwischen den beiden vorderen Rädern 3a unterhalb der Neigeachse 35 angeordneten und am Grundrahmen 1 festgelegten Lenkgetriebegehäuses 24 horizontal verschiebbar gelagert ist. Die Spurstangenantriebskulisse 43 weist des Weiteren einen in Fahrtrichtung verlaufenden Drehbolzen 44 mit einem sich in Fahrtrichtung erstreckenden zweiten Langloch 43a auf. Ein Lenkrohr 6 verläuft durch die Neigeachse 35 des Neigerahmens 2 und weist unterhalt der Neigeachse 35 in geeignetem Abstand zu dieser einen Lenkhebel 41 mit einem Bolzen 41a auf, der in das Langloch 43a der Spurstangenantriebskulisse 43 eingreift und bei Drehen des Lenkrohres 6 die Spurstangenantriebskulisse 43 innerhalb des innerhalb des Lenkgetriebegehäuses 24 entlang des Langlochs 24a verschiebt.

Die Spurstangen 7 der beiden vorderen Räder 3a sind an die Spurstangenantriebskulisse 43 gekoppelt.

Sowohl bei Drehung des Lenkrohres 6 im Uhrzeigersinn als auch bei Neigung des Neigerahmens 2 im Uhrzeigersinn (jeweils in Fahrtrichtung gesehen) werden die Spurstangenantriebskulisse 43 und folglich auch die Spurstangen 7 vermittels des Lenkhebels 41 mit Bolzen 41a nach links verschoben, so dass die vorderen Räder 3a im Uhrzeigersinn um ihre Achsschenkel 4 gedreht werden und damit eine Lenkbewegung in Fahrtrichtung gesehen nach rechts erfahren. Bei Drehung des Lenkrohres 6 gegen den Uhrzeigersinn als auch bei Neigung des Neigerahmens 2 gegen den Uhrzeigersinn erfahren die vorderen Räder 3a in analoger Weise eine Lenkbewegung nach links.

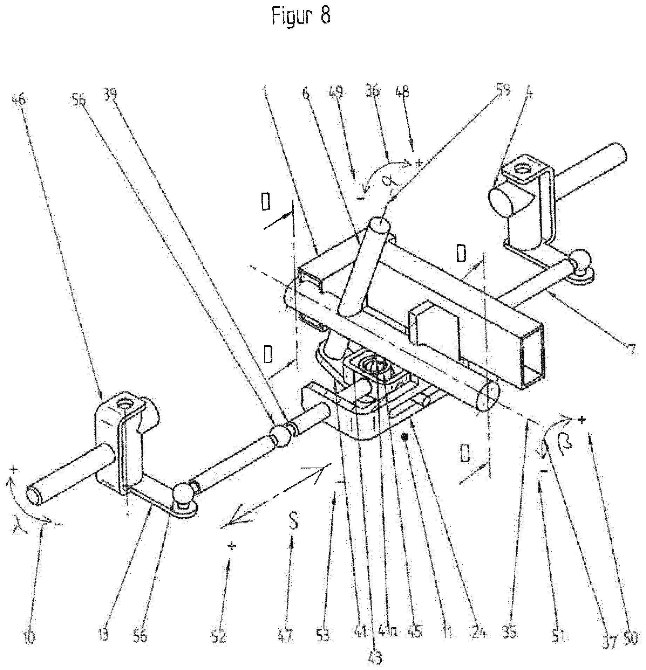

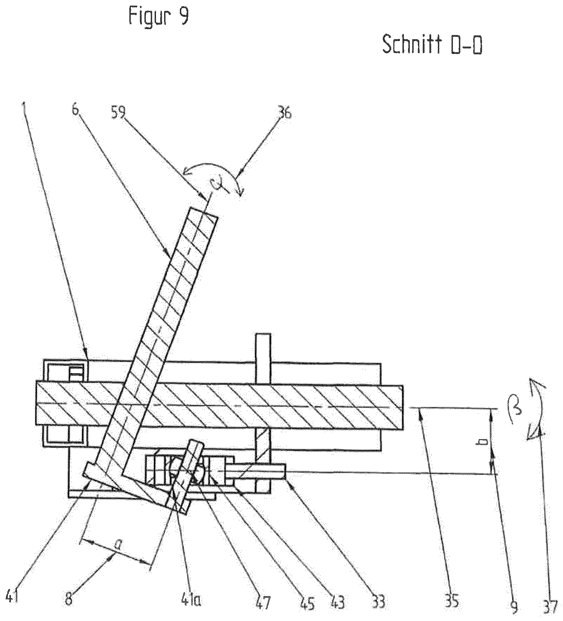

Das in den Figuren 8 und 9 dargestellte vierte Ausführungsbeispiel eines Lenkgetriebes 11 beispielsweise für ein Fahrzeug gemäß den Figuren 1, und 10 bis 12 unterscheidet sich von dem dritten Ausführungsbeispiel der Figuren 6 und 7 insbesondere dadurch, dass in die Spurstangenantriebskulisse 43 an Stelle eines Drehbolzens 44 ein Pendelkugellager 45 vorgesehen ist, in das der Bolzen 41a des Lenkhebels 41 eingreift.

Bei allen oben erläuterten Ausführungsbeispielen verläuft die Lenkachse 59 beispielhaft durch die Neigeachse 35, was aber nicht unbedingt erforderlich ist. Die Lenkachse 59 kann beispielsweise bei zweisitzigen Fahrzeugen, bei denen die beiden Sitze in Fahrtrichtung gesehen nebeneinander angeordnet sind, seitlich versetzt neben der Neigeachse 35 verlaufen und auf ein geeignet im Fahrzeug angeordnetes Lenkgetriebe 11 einwirken.

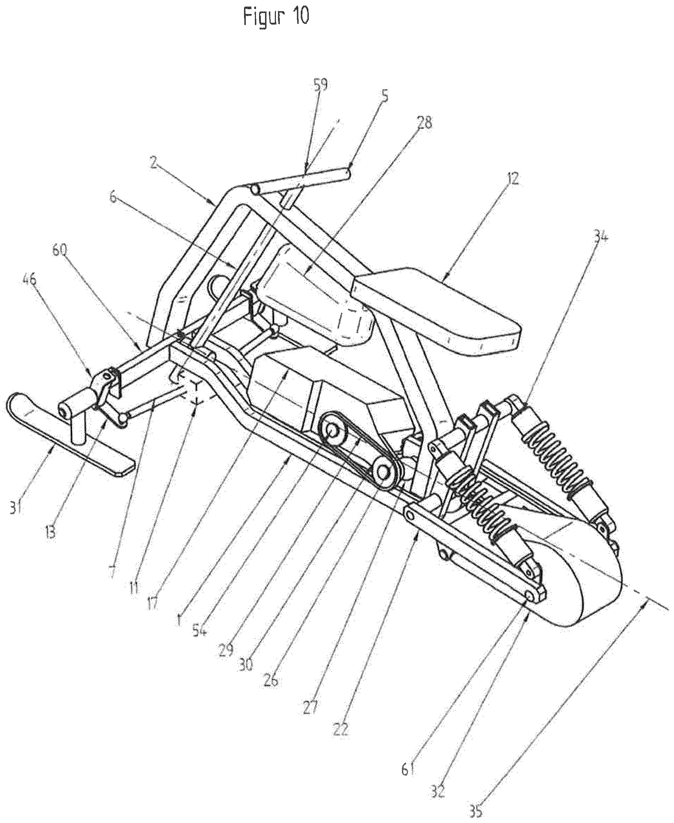

Die Figur 10 zeigt ein Ausführungsbeispiel für die Ausbildung des Fahrzeuges als Schneemobil, wobei im Unterschied zum Fahrzeug der Figur 1 anstelle der vorderen Räder Kufen 31 vorgesehen sind, welche ebenso gegenüber dem Grundrahmen 1 lenkbar sind. An Stelle der hinteren Räder ist eine Antriebsraupe 32 vorgesehen.

Insbesondere bei Schneemobilen ist es wichtig, dass diese im bergigen Gelände angenehm gefahren werden können, was durch den Neigerahmen 2 erzielt wird. Darüber hinaus wird somit nicht nur ein erhöhter Fahrspaß durch die schneller mögliche Kurvenfahrt erzielt, sondern auch ein zusätzliches Maß an Sicherheit gewonnen, da der Fahrzeuglenker den Neigerahmen 2 stets senkrecht halten kann, auch wenn er schräg einen Hang hinunter- oder hinauffährt und in der Kurvenfahrt den Schwerpunkt so nach innen verlagern kann, dass das Kippmoment deutlich reduziert wird.

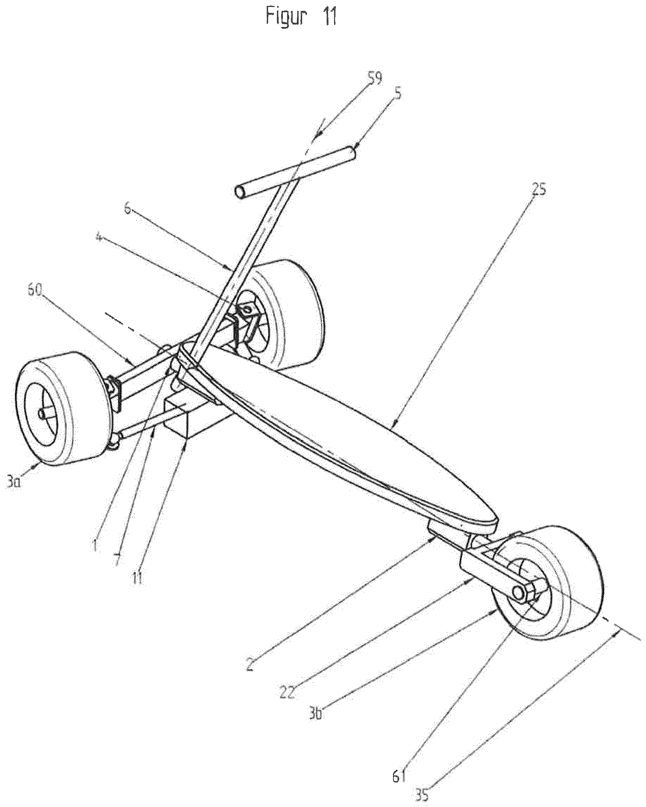

Die Figur 11 zeigt ein Ausführungsbeispiel für ein dreirädriges Fahrzeug mit einem Grundrahmen 1 und einem gegenüber diesem neigbaren Neigerahmen 2 mit einer Stehfläche 25. An einer Vorderachse 60 sind zwei vordere Räder 3a festgelegt, die über eine Achsschenkellenkung drehbar sind. Unterhalb der Neigeachse 35 ist ein Lenkgetriebe 11 angeordnet, das beispielsweise gemäß einem der oben erläuterten fünf Ausführungsbeispiele oder in einer anderen Ausgestaltung gemäß der Erfindung ausgebildet sein kann.

Das dreirädrige Fahrzeug kann motorisiert sein oder einfach per Fuß angetrieben werden.

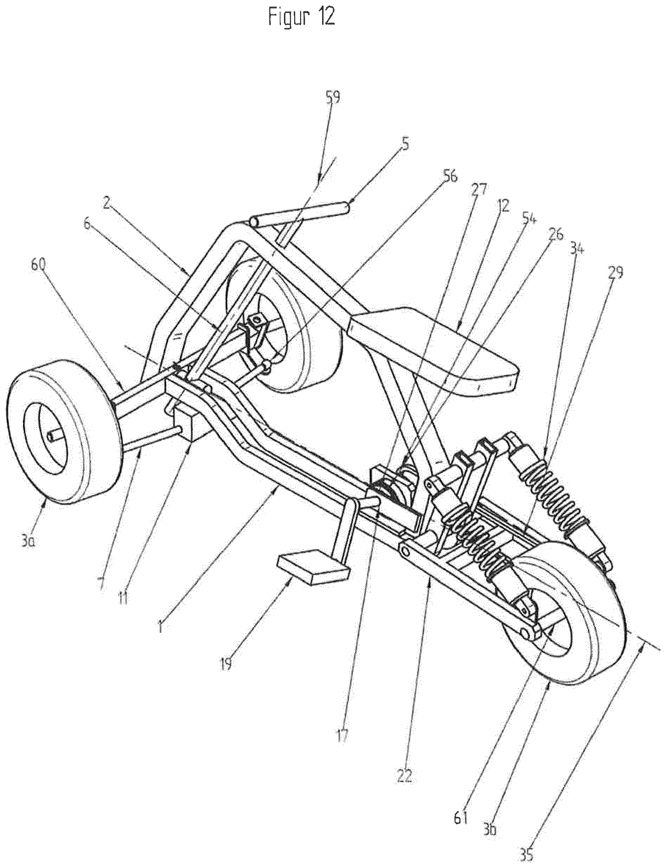

Figur 12 zeigt ein Fahrzeug, welches sich von dem in Zusammenhang mit Figur 1 beschriebenen Fahrzeug im Wesentlichen dadurch unterscheidet, dass es als dreirädriges Fahrzeug ausgebildet ist und anstelle von zwei hinteren Rädern nur ein hinteres Rad 3b und anstelle des Verbrennungsmotors ein Pedalantrieb 19 vorgesehen ist. Der Pedalantrieb 19 ist am Neigerahmen 2 festgelegt, neigt sich folglich mit diesem, und ist über ein Kugelantriebsgelenk 27 an ein am Grundrahmen 1 festgelegtes Antriebsrad oder -ritzel gekoppelt, dessen Drehung über ein Kraftübertragungselement 29, beispielsweise eine Kette oder ein Zahnriemen, auf ein Antriebsrad an der Hinterachse 61 übertragen wird.

Bei der Ausbildung gemäß Figur 12 als dreirädriges Fahrzeug ist es insbesondere wichtig, dass sich das Hinterrad 3b in der Kurve nicht mit dem Neigerahmen 2 neigt, damit eine optimale Kraftübertragung zwischen hinterem Rad 3b und Fahrbahnbelag erzielt wird.

Ein Fahrzeug gemäß der Erfindung kann auch als Zweirad ausgestaltet sein, bei dem ein Neigerahmen 2 gegenüber einem Grundrahmen 1 neigbar ausgestaltet ist.

Die mittels Achsschenkellenkung lenkbaren Kontaktelemente eines Fahrzeugs gemäß den Ausführungsbeispielen können über Stoßdämpfer und Querlenker in herkömmlicher Weise gefedert sein.

Sämtliche Ausführungsbeispiele eines Fahrzeugs gemäß der Erfindung können eine Arretierung 57 (vgl. Figur 1) für den Neigerahmen 2 aufweisen, mit der bei Bedarf der Neigerahmen 2 gegenüber dem Grundrahmen 1 fixiert werden kann.

### Bezugszeichenliste:

- 1: Grundrahmen
- 2: Neigerahmen
- 3a, 3b: Kontaktelement (Rad, Kufe, Raupe, Schwimmkörper)
- 4: Achsschenkel
- 5: Lenker
- 6: Lenkrohr
- 7: Spurstange
- 8: Abstand a zwischen Lenkachse und Angriffspunkt der Drehung des Lenkrohrs am Spurstangenbetätigungselement
- 9: Abstand b zwischen Neigeachse und Angriffspunkt der Neigung des Neigerahmens am Spurstangenbetätigungselement
- 10: Einschlagwinkel λ
- 11: Lenkgetriebe
- 12: Sitzfläche
- 13: Spurhebel
- 14: -
- 15: -
- 16: -
- 17: Antriebseinheit (Pedalantrieb, Verbrennungsmotor und/oder Elektromotor)
- 18: -
- 19: Pedalantrieb
- 20: -
- 21: -
- 22: Schwinge
- 23: Fußraste
- 24: Lenkgetriebegehäuse
- 24a: Langloch
- 25: Stehfläche
- 26: Schwenkgetriebe
- 27: Kugelantriebsgelenk
- 28: Energiespeicher
- 29: Kraftübertragungsmittel
- 30: Schwenkrad oder -ritzel
- 31: Kufe
- 32: Antriebsraupe
- 33: Kulissenführungsbolzen
- 34: Stoßdämpfer
- 35: Neigeachse
- 36: Lenkwinkel Drehlenkung α
- 37: Neigewinkel Neigerahmen β
- 38: Zahnradsegment
- 39: Spurstangenbetätigungselement
- 40: Führungselement
- 41: Lenkhebel
- 41a: Bolzen
- 42: Stange
- 42a: Lasche
- 42b: Langloch
- 43: Spurstangenantriebskulisse
- 43a: Langloch
- 44: Drehbolzen
- 45: Pendelkugellager
- 46: Radträger
- 47: Bewegungsachse
- 48: positive Drehung Lenkung
- 49: negative Drehung Lenkung
- 50: positive Neigung Neigerahmen
- 51: negative Neigung Neigerahmen
- 52: positive Verschiebung Spurstange S
- 53: negative Verschiebung Spurstange S
- 54: Antriebsrad oder -ritzel
- 55: -
- 56: Kugelgelenk
- 57: Arretierung
- 58: Nachlaufwinkel y
- 59: Lenkachse
- 60: Vorderachse
- 61: Hinterachse
- 62: -
- 63: Kraftübertragungsmittel
- 64: Antriebsrad oder -ritzel

## Patentansprüche

1. Fahrzeug mit
- einem Grundrahmen (1), an dem mindestens ein mittels einer Achsschenkellenkung lenkbares Kontaktelement (3a), beispielsweise ein Rad, eine Kufe, eine Raupenkette oder ein Schwimmkörper, befestigt ist,
- einem gegenüber dem Grundrahmen (1) neigbaren Neigerahmen (2) mit einer Neigeachse (35),
- einem Lenkrohr (6) mit einer schräg oder senkrecht zur Neigeachse (35) verlaufenden Lenkachse (59), wobei das Lenkrohr (6) an den Neigerahmen (2) derart gekoppelt ist, dass es sich bei Neigen des Neigerahmens (2) automatisch mit neigt,
- mindestens einer Spurstange (7) und
- einem Spurstangenbetätigungselement (39)
**dadurch gekennzeichnet, dass** das Spurstangenbetätigungs-element (39)
- gegenüber dem Neigerahmen (2) beweglich ist, und
- durch Neigen des Neigerahmens (2) um die Neigeachse (35) und unabhängig davon durch Drehen des Lenkrohres (6) um die Lenkachse (59) derart betätigt wird, dass das lenkbare Kontaktelement (3a) vermittels der mindestens einen Spurstange (7) eine Lenkbewegung erfährt, ohne dass dadurch bei Kurvenfahrt eine wesentliche Änderung des Sturzes des mindestens einen lenkbaren Kontaktelements (3a) erfolgt.

2. Fahrzeug nach Anspruch 1, **dadurch gekennzeichnet, dass** das Spurstangenbetätigungselement (39) sowohl in einem Abstand (9) zur Neigeachse (35) als auch in einem Abstand (8) zur Lenkachse (59) angeordnet ist.

3. Fahrzeug nach Anspruch 1 oder 2, **dadurch gekennzeichnet, dass** das Lenkrohr (6) fest mit dem Neigerahmen (2) verbunden ist.

4. Fahrzeug nach einem der vorangehenden Ansprüche, **dadurch gekennzeichnet, dass** die Neigeachse (35) gegenüber dem Grundrahmen (1) feststehend ist.

5. Fahrzeug nach einem der vorangehenden Ansprüche, **dadurch gekennzeichnet, dass** das Spurstangenbetätigungselement (39) in einem am Neigerahmen (2) befestigten Führungselement (40) beweglich angeordnet ist, und von diesem bei Neigen des Neigerahmens (2) und unabhängig davon in diesem durch Drehen des Lenkrohres (6) gegenüber dem Grundrahmen (1) zur Betätigung der mindestens einen Spurstange (7) bewegt werden kann.

6. Fahrzeug nach einem der Ansprüche 1 bis 4, **dadurch gekennzeichnet, dass** das Spurstangenbetätigungselement (39) in einem am Grundrahmen (1) befestigten Führungselement (40) beweglich gelagert ist und in diesem durch Neigen des Neigerahmens (2) und unabhängig davon durch Drehen des Lenkrohres (6) zur Betätigung der mindestens einen Spurstange (7) bewegt werden kann.

7. Fahrzeug nach einem der Ansprüche 1 bis 4, **dadurch gekennzeichnet, dass** das Spurstangenbetätigungselement (39) in einem Abstand zur Neigeachse (35) und einem Abstand zur Lenkachse (59) am Lenkrohr (6) befestigt ist, so dass dieses durch Neigen des Neigerahmens (2) und unabhängig davon durch Drehen des Lenkrohres (6) zur Betätigung der mindestens einen Spurstange (7) bewegt werden kann.

8. Fahrzeug nach einem der vorangehenden Ansprüche, **dadurch gekennzeichnet, dass** ein Nachlauf des mindestens einen lenkbaren Kontaktelements (3a) bei dessen Einlenken ein Rückstellmoment auf den Neigerahmen (2) und das Lenkrohr (6) bewirkt.

9. Fahrzeug nach Anspruch 8, **dadurch gekennzeichnet, dass** ein Nachlaufwinkel □ veränderbar ist, so dass das Rückstellmoment individuell auf die Wünsche des Fahrzeuglenkers anpassbar ist.

10. Fahrzeug nach einem der vorangehenden Ansprüche,
**dadurch gekennzeichnet, dass** der Neigerahmen (2) über Lagereinheiten an einer in Fahrrichtung liegenden Neigeachse (35) mit dem Grundrahmen (1) verbunden ist.

11. Fahrzeug nach einem der vorangehenden Ansprüche,
**dadurch gekennzeichnet, dass** an dem Neigerahmen (2) zumindest eine Sitz- (12) oder Stehfläche (25) für den Fahrzeuglenker, ein Lenker (5) oder Lenkrad und ein damit verbundenes Lenkrohr (6) angeordnet ist.

12. Fahrzeug nach einem der vorangehenden Ansprüche,
**dadurch gekennzeichnet, dass** am Neigerahmen (2) eine Antriebseinheit (17) angeordnet ist und zur Überbrückung der Neigebewegung zwischen dem Neigerahmen (2) und dem Grundrahmen (1) ein Schwenkgetriebe (26) vorgesehen ist, und das Schwenkgetriebe (26) zumindest ein Kugelantriebsgelenk (27) aufweist.

13. Fahrzeug nach einem der vorangehenden Ansprüche,
**dadurch gekennzeichnet, dass** ein Mittel zur Arretierung (57) des Neigerahmens (2) gegenüber dem Grundrahmen (1) vorgesehen ist.

## Claims

1. Vehicle having
- a main frame (1) to which there is fixed at least one contact element (3a), for example a wheel, a skid, a caterpillar chain or a float, which can be steered by means of an axle pivot steering arrangement,
- a tilting frame (2) which is tiltable relative to the main frame (1) and has a tilt axis (35),
- a steering tube (6) having a steering axis (59) running obliquely or perpendicularly to the tilt axis (35), the steering tube (6) being coupled to the tilting frame (2) such that it automatically tilts together with the tilting frame (2) during tilting thereof,
- at least one track rod (7) and
- a track rod actuation element (39)
**characterised in that** the track rod actuation element (39)
- is movable relative to the tilting frame (2) and
- by tilting of the tilting frame (2) about the tilt axis (35) and independently thereof by rotation of the steering tube (6) about the steering axis (59) is actuated such that the steerable contact element (3a) undergoes a steering movement by means of the at least one track rod (7), without a substantial change in the camber of the at least one steerable contact element (3a) taking place as a result during cornering.

2. Vehicle according to claim 1, **characterised in that** the track rod actuation element (39) is arranged both at a distance (9) from the tilt axis (35) and at a distance (8) from the steering axis (59).

3. Vehicle according to claim 1 or 2, **characterised in that** the steering tube (6) is connected to the tilting frame (2) in a fixed manner.

4. Vehicle according to one of the preceding claims, **characterised in that** the tilt axis (35) is fixed relative to the main frame (1).

5. Vehicle according to one of the preceding claims, **characterised in that** the track rod actuation element (39) is arranged movably in a guide element (40) fixed to the tilting frame (2), and can be moved relative to the main frame (1) by this on tilting of the tilting frame (2) and independently thereof in this by rotation of the steering tube (6), for actuation of the at least one track rod (7).

6. Vehicle according to one of claims 1 to 4, **characterised in that** the track rod actuation element (39) is mounted movably in a guide element (40) fixed to the main frame (1) and can be moved in this by tilting of the tilting frame (2) and independently thereof by rotation of the steering tube (6), for actuation of the at least one track rod (7).

7. Vehicle according to one of claims 1 to 4, **characterised in that** the track rod actuation element (39) is fixed to the steering tube (6) at a distance from the tilt axis (35) and a distance from the steering axis (59) so that this can be moved by tilting of the tilting frame (2) and independently thereof by rotation of the steering tube (6), for actuation of the at least one track rod (7).

8. Vehicle according to one of the preceding claims, **characterised in that** a castor of the at least one steerable contact element (3a) causes, on steering in thereof, a righting moment on the tilting frame (2) and the steering tube (6).

9. Vehicle according to claim 8, **characterised in that** a castor angle is variable, so that the righting moment can be adapted individually to the wishes of the driver.

10. Vehicle according to one of the preceding claims, **characterised in that** the tilting frame (2) is connected to the main frame (1) via mounting units on a tilt axis (35) lying in the direction of travel.

11. Vehicle according to one of the preceding claims, **characterised in that** at least a sitting (12) or standing area (25) for the driver, a handlebar (5) or steering wheel and an associated steering tube (6) is arranged on the tilting frame (2).

12. Vehicle according to one of the preceding claims, **characterised in that** a drive unit (17) is arranged on the tilting frame (2) and a part-turn gearbox is provided for bridging of the tilting movement between the tilting frame (2) and the main frame (1), and the part-turn gearbox (26) has at least one ball drive joint (27).

13. Vehicle according to one of the preceding claims, **characterised in that** a means (57) for locking the tilting frame (2) relative to the main frame (1) is provided.

## Revendications

1. Véhicule comprenant
- un cadre de base (1), sur lequel est fixé au moins un élément de contact (3a), par exemple une roue, un patin, une chenille ou un corps flottant, pouvant être dirigé au moyen d'une direction à fusée,
- un cadre inclinable (2) qui peut être incliné par rapport au cadre de base (1) et qui présente un axe d'inclinaison (35),
- un tube de direction (6) présentant un axe de direction (59) s'étendant de manière oblique ou perpendiculaire à l'axe d'inclinaison (35), dans lequel le tube de direction (6) étant couplé au cadre inclinable (2) de manière à s'incliner automatiquement conjointement avec l'inclinaison du cadre inclinable (2),
- au moins une barre de couplage (7) et
- un élément d'actionnement de barre de couplage (39)
**caractérisé en ce que** l'élément d'actionnement de barre de couplage (39)
- est mobile par rapport au cadre inclinable (2), et
- est actionné à la suite d'une inclinaison du cadre inclinable (2) autour de l'axe d'inclinaison (35) et, indépendamment de cela, à la suite d'une rotation du tube de direction (6) autour de l'axe de direction (59), de manière à imprimer un mouvement de braquage à l'élément de contact (3a) orientable par l'intermédiaire de ladite au moins une barre de couplage (7) sans que le carrossage dudit au moins un élément de contact (3a) orientable ne soit sensiblement modifié lors de la négociation d'un virage.

2. Véhicule selon la revendication 1, **caractérisé en ce que** l'élément d'actionnement de barre de couplage (39) est agencé aussi bien à distance (9) de l'axe d'inclinaison (35) qu'à distance (8) de l'axe de direction (59).

3. Véhicule selon la revendication 1 ou 2, **caractérisé en ce que** le tube de direction (6) est relié fixement au cadre inclinable (2).

4. Véhicule selon l'une quelconque des revendications précédentes, **caractérisé en ce que** l'axe d'inclinaison (35) est fixe par rapport au cadre de base (1).

5. Véhicule selon l'une quelconque des revendications précédentes, **caractérisé en ce que** l'élément d'actionnement de barre de couplage (39) est monté mobile dans un élément de guidage (40) fixé au cadre inclinable (2), et peut être déplacé par celui-ci, lors de l'inclinaison du cadre inclinable (2) et, indépendamment de cela, dans celui-ci à la suite d'une rotation du tube de direction (6) par rapport au cadre de base (1) pour l'actionnement de ladite au moins une barre de couplage (7).

6. Véhicule selon l'une quelconque des revendications 1 à 4, **caractérisé en ce que** l'élément d'actionnement de barre de couplage (39) est monté mobile dans un élément de guidage (40) fixé au cadre de base (1) et peut être déplacé dans celui-ci à la suite d'une inclinaison du cadre inclinable (2) et, indépendamment de cela, à la suite d'une rotation du tube de direction (6) pour l'actionnement de ladite au moins une barre de couplage (7).

7. Véhicule selon l'une quelconque des revendications 1 à 4, **caractérisé en ce que** l'élément d'actionnement de barre de couplage (39) est fixé à distance de l'axe d'inclinaison (35) et à distance de l'axe de direction (59) sur le tube de direction (6), de sorte que celui-ci, à la suite d'une inclinaison du cadre inclinable (2) et, indépendamment de cela, à la suite d'une rotation du tube de direction (6), peut être déplacé pour l'actionnement de ladite au moins une barre de couplage (7).

8. Véhicule selon l'une quelconque des revendications précédentes, **caractérisé en ce qu'**une roulette dudit au moins un élément de contact (3a) orientable, lors du changement de direction de celui-ci, provoque un couple de rappel sur le cadre inclinable (2) et le tube de direction (6).

9. Véhicule selon la revendication 8, **caractérisé en ce qu'**un angle de chasse est variable, de sorte que le couple de rappel est adaptable individuellement aux besoins du conducteur du véhicule.

10. Véhicule selon l'une quelconque des revendications précédentes,
**caractérisé en ce que** le cadre inclinable (2) est relié au cadre de base (1) par l'intermédiaire d'unités support sur un axe d'inclinaison (35) situé dans le sens de marche.

11. Véhicule selon l'une quelconque des revendications précédentes,
**caractérisé en ce qu'**au moins une surface d'assise (12) ou d'appui (25) pour le conducteur du véhicule, un guidon (5) ou volant et un tube de direction (6) relié à celui-ci sont agencés sur le cadre inclinable (2).

12. Véhicule selon l'une quelconque des revendications précédentes,
**caractérisé en ce qu'**une unité d'entraînement (17) est agencée sur le cadre inclinable (2) et un mécanisme de pivotement (26) est prévue entre le cadre inclinable (2) et le cadre de base (1) pour surmonter le mouvement d'inclinaison, et le mécanisme de pivotement (26) présente au moins un joint sphérique d'entraînement (27).

13. Véhicule selon l'une quelconque des revendications précédentes,
**caractérisé en ce qu'**un moyen de blocage (57) du cadre inclinable (2) par rapport au cadre de base (1) est prévu.
